Europäisches Patentamt

European Patent Office

Office européen des brevets

(11) Veröffentlichungsnummer: **0 079 600**
**B1**

(12) # EUROPÄISCHE PATENTSCHRIFT

(45) Veröffentlichungstag der Patentschrift:
04.02.87

(51) Int. Cl.⁴: **G 01 N 23/10**, G 01 V 5/00

(21) Anmeldenummer: 82110476.7

(22) Anmeldetag: 12.11.82

(54) Verfahren und Vorrichtung zur Untersuchung des Inhaltes von Containern.

(30) Priorität: 13.11.81 DE 3145227

(43) Veröffentlichungstag der Anmeldung:
25.05.83 Patentblatt 83/21

(45) Bekanntmachung des Hinweises auf die Patenterteilung:
04.02.87 Patentblatt 87/6

(84) Benannte Vertragsstaaten:
BE DE FR GB

(56) Entgegenhaltungen:
GB-A-2 051 345
GB-A-2 064 109

(73) Patentinhaber: Heimann GMBH, Weher Köppel 6,
D-6200 Wiesbaden 1 (DE)

(72) Erfinder: Dönges, Gerhard, Dipl.- Ing., Am Markt
1, D-6209 Heidenrod- Kemel (DE)
Erfinder: Herwig, Thomas, Dipl.- Phys.,
Wiesenstrasse 8, D-6228 Eltville- Martinsthal (DE)
Erfinder: Kunze, Claus, Dr., Dipl.- Phys.,
Sonnental 19, D-6204 Taunusstein 4 (DE)
Erfinder: Stein, Karl- Ulrich, Dr,. Dipl.- Ing.,
Germersheimer Strasse 5, D-8000 München 90 (DE)

(74) Vertreter: Mehl, Ernst, Dipl.- Ing., Postfach 22 01
76, D-8000 München 22 (DE)

## Beschreibung

Die Erfindung betrifft ein Verfahren zur Untersuchung des Inhaltes von Containern gemäß dem Oberbegriff des Patentanspruches 1 und eine Vorrichtung zur Durchführung dieses Verfahrens gemäß dem Oberbegriff des Anspruches 7.

Durch die GB-A-2 064 109 ist es bekannt, ein zylindrisches Gefäß für Untersuchungsgut vorzusehen, das durch einen einen kleinen Querschnitt aufweisenden Röntgenstrahl hoher Energie durchleuchtet wird, wobei das Gefäß gegenüber dem Röntgenstrahl bewegt und dadurch die Verteilung der Massenschwächungskoeffizienten ermittelt wird. Eine einwandfreie Aussage über die Verteilung von Massenschwächungskoeffizienten ist bei dem bekannten Gerät nicht möglich, da das Untersuchungsgut bei der Drehung des zylinderförmigen Gefäßes relativ zu diesem Gefäß seine Lage ändert. Für die Untersuchung des Inhaltes von quaderförmigen Containern, die in der Regel nicht vollständig gefüllt sind, ist dieser Schrift keinerlei Hinweis entnehmbar.

Für die Überprüfung von Containern, beispielsweise bei der Zollfandung, sind das Leergewicht des Containers, das Volumen des Containers und das spezifische Gewicht bzw. das Packungsgewicht des angegebenen Inhaltes des Containers bekannt.

Bei der Prüfung kann das Gesamtgewicht des Containers ermittelt werden. Ist dieses größer als bei vollständiger Ausfüllung des Containervolumens mit den angegebenen Waren, so ist in dem Container schwereres Material enthalten als angegeben.

Enthält der Container leichteres Material als angegeben, so kann dies von einem nicht vollgefüllten Container über eine Wägung nicht unterschieden werden. Bei einem nicht vollgefüllten Container können außerdem schwere Gegenstände, beispielsweise Waffen, unter leichterem Material versteckt sein, wobei über eine verringerte Füllhöhe das angegebene Gesamtgewicht des Containers richtig eingestellt ist. In diesem Fall kann durch eine Wägung kein Hinweis auf einen nicht angegebenen Containerinhalt gewonnen werden.

Der Erfindung liegt die Aufgabe zugrunde, ein Verfahren und eine Vorrichtung der eingangs genannten Art zu schaffen, die es ermöglichen, den Inhalt eines Containers auf nicht angegebene Gegenstände hin zu überprüfen, ohne den Container zu öffnen.

Diese Aufgabe ist erfindungsgemäß bei einem Verfahren gemäß dem Oberbegriff des Patentanspruches 1 durch die Merkmale des kennzeichnenden Teiles dieses Patentanspruches gelöst.

Bei dem erfindungsgemäßen Verfahren wird über die Verteilung der Massenschwächungskoeffizienten die Füllhöhe im Container ermittelt. Aus dem Leergewicht dem Gesamtgewicht und dem Volumen des Containers kann das spezifische Gewicht bzw. das Packungsgewicht des Inhaltes des Containers ermittelt werden. Das Packungsgewicht ist das Gewicht der Ware in der üblichen Verpackung je Volumeneinheit. Es ist bei lose aufgeschütteten Waren mit dem Schüttgewicht identisch. Das ermittelte Packungsgewicht kann mit dem angegebenen Packungsgewicht verglichen werden. Dadurch kann auf unzulässigen Containerinhalt, z.B. auf Waffen, geschlossen werden. Für die Überprüfung sind relativ wenig Meßpunkte erforderlich, eine geringe Speicherkapazität reicht aus und der Meßvorgang läuft relativ schnell ab.

Bei einer Weiterbildung der Erfindung ist eine genauere Messung möglich, indem die Verteilung der Massenschwächungskoeffizienten in einen Datenspeicher eingegeben wird und indem die Schwankungen der Massenschwächungskoeffizienten zur Bestimmung der Lage und der Art eines nicht angegebenen Inhaltes im Container ausgewertet wird. Dabei ergibt sich die Art des nicht angegebenen Inhaltes durch die Ausdehnung des ermittelten Gegenstandes und die Stärke der Abschwächung.

Eine genaue Lokalisierung eines nicht angegebenen Gegenstandes in einem Container ist ermöglicht, indem die Verteilung der Massenschwächungskoeffizienten für zumindest zwei verschiedene Strahlrichtungen ermittelt wird und indem so die räumliche Lage von nicht angegebenen Inhalten im Container ermittelt wird. Die beiden Strahlrichtungen können in verschiedenen Winkeln zueinander verlaufen, die Anordnung der Sender und Empfänger kann nach konstruktiven Gesichtspunkten erfolgen.

Für Container, die Feldfrüchte oder Obst enthalten sollen, wird vorteilhaft der ermittelte Massenschwächungskoeffizient mit dem für Wasser bekannten verglichen. Dies reicht für viele Fälle bereits aus.

Der beschriebenen Bestimmung der Dichte des Containerinhaltes liegen die folgenden Beziehungen zugrunde:

Die Durchlässigkeit für Röntgenstrahlung hängt exponentiell vom Absorptionskoeffizienten und der Dicke ab:

$$D = e^{-\mu d}$$

In der Röntgenphysik ist es üblich, mit Schwächungskoeffizienten zu arbeiten, d.h. mit dem Quotienten Absorptionskoeffizient dividiert durch die Dichte. Wenn man diesen Wert $\mu$ geteilt durch $\zeta$ ist gleich k setzt, so ergibt sich

$$d = e^{-k \cdot \zeta \cdot d}$$

Hierbei bedeuten $\mu$ = Absorptionskoeffizient, d = Dicke, f = Dichte.

Für k kann der Wert für Wasser als Konstante eingesetzt werden. Die Dicke der durchstrahlten Schicht kann gleich der Dicke des Containers gesetzt und damit ebenfalls als konstant angesehen werden. Demgemäß hängt die Durchlässigkeit für die Röntgenstrahlung mit ausreichender Näherung nur noch von der Dichte des Materials zwischen den zwei Containerwänden ab. Diese Beziehungen gelten in der vorliegenden einfachen Form für eine bestimmte Energie der Röntgenstrahlung. Bei einer Mischstrahlung eines Röntgengenerators wird für die Energie ein über das gesamte Spektrum hinweg integrierter Wert für k eingesetzt.

Dem Container kann auch eine Dampfprobe entnommen werden, die in einem Massenspektrometer analysiert wird. Aus dieser Analyse und den Messungen der Dichte bzw. der Dichteverteilung wird die Art des nicht angegebenen Inhaltes des Containers ermittelt.

So können insbesondere durch die Feststellung von Schießpulverresten eingeschlossene Waffen von anderen Metallgegenständen unterschieden werden. Auch Waffenöl macht sich bei der Massenspektroskopie bemerkbar und deutet auf eingeölte Waffen hin.

Eine zeilenweise oder spaltenweise Abtastung des Containers wird erreicht, indem der Container hin- und hergeschoben und auf- und abbewegt wird und indem die Schiebebewegung oder die Hebebewegung kontinuierlich erfolgt, die jeweils andere Bewegung aber schrittweise abläuft, indem die Durchleuchtung oder die Auswertung impulsförmig erfolgt und indem die Impulse so kurz sind, daß keine unzulässige Bewegungsunschärfe in die Meßwerte eingeht. Auf diese Weise läßt sich vorteilhaft eine sehr hobe Durchlaufgeschwindigkeit erreichen, da der schwere Container in einer Richtung Bleichförmig, nicht aber schrittweise bewegt wird. Lediglich nach dem Durchlaufen seiner ganzen Länge wird er um einen Schritt in der zweiten Richtung weiterbewegt. Bei diesem Verfahren wird trotz einer hohen Arbeitegeschwindigkeit jeder Punkt des Containers erfaßt. Eine ausreichend genaue Prüfung eines Containers ist hierbei in etwa zehn Minuten möglich. Dabei ist es möglich, entweder die Strahlungsquelle oder den Empfänger kontinuierlich arbeiten zu lassen, während des andere Teil impulsförmig arbeitet.

Des erfindungsgemäße Verfahren wird in einer Vorrichtung gemäß Anspruch 7 durchgeführt. Dieső Vorrichtung enthält in einer vorteilhaften Weiterbildung als Empfänger einen Szintillationskristall und einen von dessen Strahlung erreichbaren optoelektrische Wandler. Der Ausgang des optoelektrischen Wandlers kann dabei auf einen zur Speicherung der Signale geeigneten Computer geschaltet sein. Der Szintillationskristall nimmt dabei nur einen seiner Größe entsprechenden Strahlquerschnitt auf. Er definiert somit das Auflösungsvermögen der Vorrichtung. Als optoelektrischer Wandler eignen sich Leuchtdioden oder Photomultiplayer.

Um Streustrahlung sicher auszuschalten, ist es vorteilhaft, wenn am Ausgang der Strahlungsquelle und vor dem Empfänger je ein Kollimator angeordnet ist. Dieser läßt nur annähernd parallele Strahlung aus der Strahlungsquelle austreten bzw. in den Empfänger eintreten.

Eine wenig aufwendige Ausführungsform der Vorrichtung is erreicht, indem sie eine hydraulische Hebe- und Schiebemechanik enthält, welche die Hebebühne so hin- und her- bzw. auf- und abbewegen kann, daß die Container zeilen- oder spaltenweise abgetastat werden. Hierbei wird der Container zweckmäßig in Längsrichtung kontinuierlich bewegt, während die Hubbewegung schrittweise erfolgt. So wird der Container in seiner größten Ausdehnung kontinuierlich bewegt, die schrittweise abzutastende Höhe des Conteiners ist wesentlich kleiner als seine Länge.

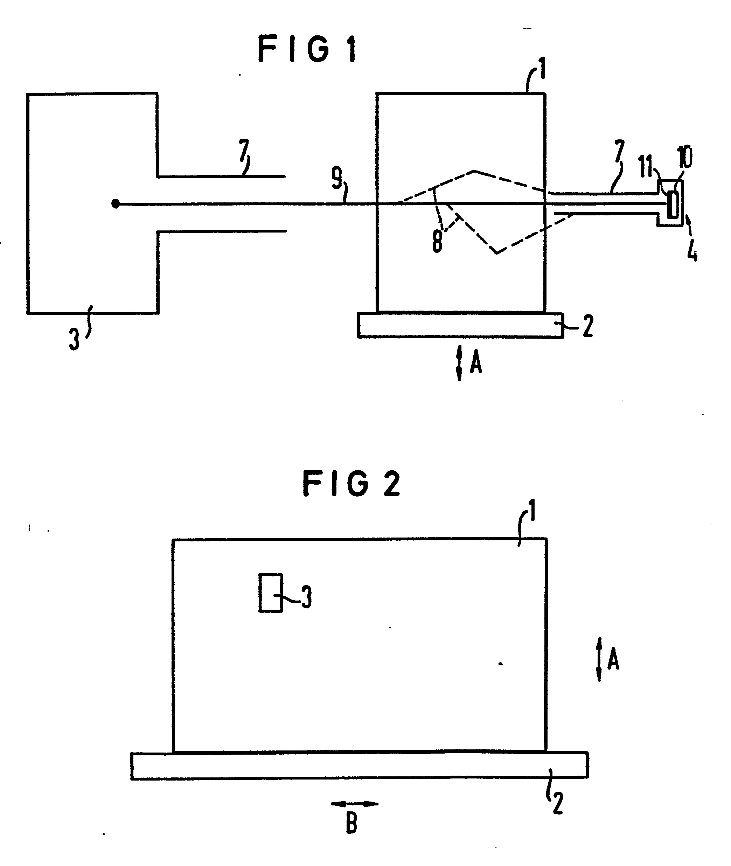

Die Erfindung wird nun anhand von drei Figuren näher erläutert. Die Figuren 1 und 2 zeigen zwei Ansichten einer erfindungsgemäßen Vorrichtung schematisch. Fig. 3 zeigt ein weiteres Ausfürungsbeispiel der Erfindung schematisch.

Ein Container 1 liegt auf einer Hebebühne 2. Eine Röntgenstrahlungsquelle 3 sendet einen Röntgenstrahl 9 durch den Container 1 hindurch zu einem Empfänger 4. Der Empfänger 4 weist einen Szintillationskristall 11 auf, dessen Licht einem optoelektrischen Wandler 10 zugeführt wird. Am Strahlausgang der Röntgenstrahlungsquelle 3 und vor dem Eingang das Empfängers 4 ist jeweils ein Kollimator 7 angebracht. Durch den Kollimator 7 kann nur ein annähernd paralleler Strahl hindurchtreten. Streulicht in dar Röntgenstrahlungsquelle wird ebenso ausgeblendet wie Streustrahlen 8, die durch Streuung im Container entstehen und zum Empfänger 4 reflektiert werden.

Die Röntgenstrahlungsquelle 3 und der Empfänger 4 sind ortsfest und genau justiert angebracht. Die Hebebühne 2 mit dem Container 1 wird in den Richtungen A und B bewegt. Vorzugsweise erfolgt in Richtung B eine kontinuierliche Bewegung, die eine zeilenweise Abtastung ermöglicht, un din Richtung A eine schrittweise Bewegung nach jeweils einem Durchlauf in Richtung B. Die schrittweise Bewegung in Richtung A kann bei jedem Umkehrpunkt der Bewegung des Containers in Richtung B erfolgen. Vorteilhaft wird während der Bewegung des Containers in Richtung B entweder die Röntgenstrahlungsquelle 3 oder der Empfänger 4 impulsweise eingaschaltet, so daß die Messung des Massenschwächungskoeffizienten in so kurzen Zeitintervallan erfolgt, daß kaine störende Bewegungsunschärfe in die Meßwerte eingeht.

Eine Erhöhung der Maßgeschwindigkeit ist durch eine Ausführungsform mit den Merkmalen gegeben, daß sie als Empfänger mehrere in einer Reihe angeordnete Szintillationskristalle und zu jedem Szintillationskristall einen von dessen Strahlung erreichbaren, gesonderten optoelektrischen Wandler enthält, daß alle Szintillationskristalle von dem Röntgenstrahl der Röntgenstrehlungsquelle erreichbar sind und daß der Signalausgang jedes einzalnen optoelektrischen Wandlers auf einen zur Speicherung der Signale geeigneten Computer gaschaltet ist. Der Röntgenstrahl kann dabei ein parallel gerichteter Strahl sein, dessen Abmessungen alla Szintillationskristalle überdekken, es kann auch ein divergierender Strahl sein, dar dann nur auf der Seite der Empfänger eine ausreichende Ausdehnung aufweisen muß, um alle Szintillationskristalle zu überdecken. Jeder Szintillationskristall definert in diesam Fall einen Hauptstrahl, Streulicht wird ausgeblendet. Der Röntgenstrahl kann sich auch aus mehreren, schon in der Röntgenstrahlungsquelle parallel ausgerichteten Hauptstrahlen zusammensetzen, die jeweils auf einen Szintillationskristall gerichtet sind.

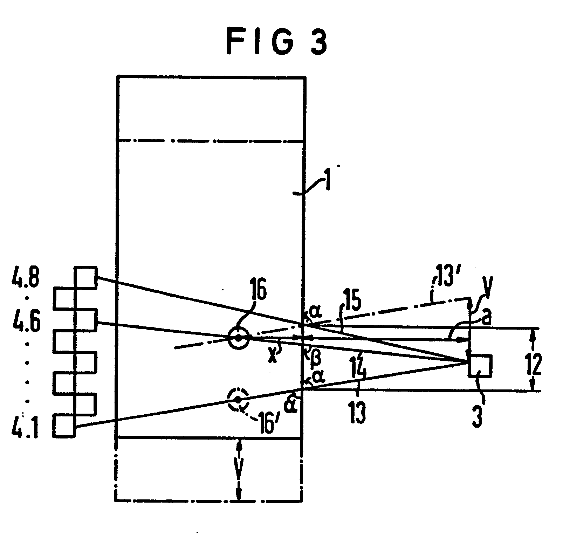

Eine räumliche Ortung eines Gegenstandes im Container wird durch eine Ausgestaltung der Erfindung mit den Merkmalen ermöglicht, daß die Röntgenstrahlungsquelle divergierende Hauptstrahlen aussendet, daß als Empfänger mehrere in einer Reihe angeordnete Szintillationskristalle und zu jedem Szintillationskristall ein von dessen Strahlung erreichbarer, gesonderter optoelektrischer Wandler vorgesehen sind, wobei die Szintillationskristalle die divergierenden Hauptstrahlen abgrenzen, daß die Szintillationskristalle in einer von der Abtastrichtung unterschiedlichen Richtung verteilt angeordnet sind und daß eine Vorschubeinrichtung, die nach dem Abtasten einer Zeile le auf die nächste Zeile vorschiebt, die Einstellung des Vorschubes auf einen Wert ermöglicht, der der Ausdehnung der von den Szintillationskristallen insgesamt erfaßten Hauptstrahlen in Vorschubrichtung, gemessen am Eintritt in den Container, entspricht. Die Ermittlung dar räumlichen Lage des Gegenstandes ist dabei durch einfache trigonometrische Berechnungen oder auch zeichnerisch möglich. Wird beispielsweise gemäß Fig. 3 ain Gegenstand 16 in einem ersten Maßstreifen durch den Hauptstrahl 13 auf dam Meßpunkt 4.6, in einem weiteren Meßstreifen dagegen durch den Hauptstrahl 13 auf dem Meßpunkt 4.1 angezeigt, so ergibt sich der Abstand x von der Containerwand aus dem Vorschub V zwischen den beiden Messungen, den Winkeln α und β der Strahlen mit der Containerwand und dem Abstand a zwischen der Containerwand und der Röntgenstrahlungsquelle 3:

$(a+x) \, tg\alpha + (a+x) \, tg\beta = V$

und daraus nach Umformung

$$X = \frac{V}{tg\alpha + tg\beta} - a$$

tgα und tgβ sind Konstanten des Gerätes, für jede Zuordnung von zwei Hauptstrahlen kann ein Wert für tgα + tgβ gespeichert werden. Zur Verdeutlichung der Verhältnisse der Verschiebung des Containers um V wurde der Hauptstrahl 13 um V versetzt in Position 13' gezeichnet. Mit dem genannten Verfahren läßt sich jeder Punkt eines Gegenstandes im Container orten und so auch die Größe des Gegenstandes bestimmen und sein Volumen und sein spezifisches Gewicht errechnen.

Die Verschiebung V braucht dabei nicht dem Vorschub für einen Zeilenabstand zu entsprechen. Der Vorschub pro Zeile darf jedoch nicht größer sein, als die Gesamtausdehnung 12 über all Hauptstrahlen auf der Containerseite, die der Röntgenstrahlungsquelle zugewandt ist. Damit ist gewehrleistet, daß jeder Punkt des Containers durchleuchtet wird. Wird der Vorschub nicht größer als die Hälfte der Gesamtausdehnung 12 gewählt, dann wird jeder Punkt in zumindest zwei Meßstreifen erfaßt und ist somit räumlich zu orten.

Als Röntgenstrahlungsquelle wird für kleine Container und Ladungan mit geringen Massenschwächungskoeffizientan vorteilhaft ein natürlicher radioaktiver Strahlar eingesetzt. Für universelle Anlagan, die auch Ladungen mit hohen Massenschwächungskoeffizienten untersuchen sollen, ist eine Röntgenstrahlungsquelle für eine Röntganstrahlung von etwa 1MeV bis 20MeV vorteilhaft.

## Patentansprüche

1. Verfahren zur Untersuchung des Inhaltes von Containern, bei dem ein Container (1) durch einen einen kleinen Querschnitt aufweisenden Röntgenstrahl (9) hoher Energie durchleuchtet wird, wobei der Container (1) gegenüber dem Röntgenstrahl (9) bewegt und dadurch die Verteilung der Projektion der Massenschwächungskoeffizienten auf eine Containerfläche ermittelt wird, dadurch gekennzeichnet, daß der Container (1) gewogen wird, daß über die Änderung der Massenschwächungskoeffizienten die Füllhöhe im Container (1) ermittelt wird und daß aus der ermittelten Füllhöhe und dem über die Wägung und dem angegebenen Leergewicht ermittelten Gewicht der Ladung das Packungsgewicht bestimmt und mit dem Packungsgewicht des angegebenen Containerinhaltes verglichen wird.

2. Verfahren nach Anspruch 1, dadurch gekennzeichnet, daß die Verteilung der Massenschwächungskoeffizienten in einen Datenspeicher eingegeben wird und daß räumliche Schwankungen der Massenschwächungskoeffizienten zur Bestimmung der Lage und der Art eines nicht angegebenen Inhaltes im Container (1) ausgewertet werden.

3. Verfahren nach Anspruch 1, dadurch gekennzeichnet, daß die Relativbewegung des Containers (1) zum Röntgenstrahl (9) durch einen Computer so gesteuert wird, daß nur die Oberfläche des Containerinhaltes abgetastet wird.

4. Verfahren nach Anspruch 2, dadurch gekennzeichnet, daß die Verteilung der Massenschwächungskoeffizienten für zumindest zwei verschiedene Strahlrichtungen ermittelt wird und daß so die räumliche Lage von nicht angegebenen Containerinhalten ermittelt wird.

5. Verfahren nach einem der Ansprüche 1 bis 4, dadurch gekennzeichnet, daß der Container (1) hin- und hergeschoben und auf- und abbewegt wird und daß die Schiebebewegung oder die Hebebewegung kontinuierlich erfolgt, daß die jeweils andere Bewegung aber schrittweise durchgeführt wird, daß die Durchleuchtung oder der Vergleich impulsförmig erfolgt und daß die Impulse so kurz eingestellt sind, daß keine unzulässige Bewegungsunschärfe in die Meßwerte eingeht.

6. Verfahren nach Anspruch 4, dadurch gekennzeichnet, daß der Container (1) über eine Containerfläche zeilenweise abgetastet wird, daß hierbei zumindest ein divergierendes Röntgenstrahlbündel den Container durchleuchtet, daß die Massenschwächungskoeffizienten über das divergierende Röntgenstrahlbündel in mehreren Meßpunkten gemessen werden, die in der zur Abtastrichtung senkrechten Richtung gegeneinander versetzt liegen, daß die so bei der Abtastung einer Zeile erhaltenen Meßwerte als Meßstreifen gespeichert werden, daß aus der Lage eines nicht angegebenen Gegenstandes in zwei oder mehreren Meßstreifen aus dem Zeilenabstand und den Strahlrichtungen in den einzelnen Meßpunkten die räumliche Lage des Gegenstandes im Container vollständig errechnet wird.

7. Vorrichtung zur Durchführung des Verfahrens nach Anspruch 1, dadurch gekennzeichnet, daß sie Mittel zur Wägung des Containers (1), zur Bestimmung des Packungsgewichtes und zum Auswerten de Vorteilung der Massenschwächungskoeffizienten auweist, daß sie zur Bewegung des Containers (1) gegenüber einem Röntgenstrahl (9) eine Hebebühne (2) für den Container (1) enthält, welche zumindest in der Höhe und in einer horizontalen Richtung verstellbar ist, und daß eine ortsfeste Röntgenstrahlungsquelle (3) und ein ortsfester Röntgenstrahlempfänger (4) auf zwei einander gegenüberliegenden Seiten der Hebebühne so angebracht sind, daß der Hauptstrahl (9) der Röntgenstrahlungsquelle (3) auf den Röntgenstrahlempfänger (4) trifft und die an den durchleuchteten Gegenständen hervorgerufene Streustrahlung (8) nicht zum Empfänger (4) gelangen kann.

8. Vorrichtung nach Anspruch 7, dadurch gekennzeichnet, daß sie als Empfänger einen Szintillationskristall (11) und einen von dessen Strahlung erreichbaren optoelektrischen Wandler (10) enthält und daß der Ausgang des optoelektrischen Wandlers (10) auf einen zur Speicherung der Signale geeigneten Computer geschaltet ist.

9. Vorrichtung nach Anspruch 7, dadurch gekennzeichnet, daß die Röntgenstrahlungsquelle (3) divergierende Hauptstrahlen (13, 14, 15) aussendet, daß als Empfänger mehrere in einer Reihe angeordnete Szintillationskristalle (11) und zu jedem Szintillationskristall (11) ein von dessen Strahlung erreichbarer, gesonderter optoelektrischer Wandler (10) vorgesehen sind, wobei die Szintillationskristalle die divergierenden Hauptstrahlen definieren, daß die Szintillationskristalle (11) in einer von der Abtastrichtung unterschiedlichen Richtung verteilt angeordnet sind und daß eine Verstelleinrichtung für die Hebebühne vorhanden ist, die nach dem Abtasten einer Zeile in der abzutastenden Containerfläche auf die nächste Zeile verstellt und die Einstellung des Stellweges auf einen Wert ermöglicht, der der Abmessung der von den Szintillationskristallen (11) insgesamt erfaßten Hauptstrahlen (13, 14, 15) in Verstellrichtung (A, B), gemessen am Eintritt in den Container (1), entsprich.

**Claims**

1. A method for eramining the contents of containers, wherein a container (1) is penetrated by an X-ray (9) which has a small cross-section and is of high energy, where the container (1) is moved relative to the X-ray (9) and the distribution of the projection of the mass attenuation coefficient onto a container surface is thereby determined, characterised in that the container (1) is weighed, that the filling level in the container (1) is determined by means of the change in the mass attenuation coefficient and that the packing weight is determined from the determined filling level and the weight of the load which is determined by the werghing and the given tare, and it is compared with the packing weight of the stated container contents.

2. A method as claimed in claim 1, characterised in that the relative movement of the container (1) to the X-ray (9) is controlled by a computer to be such that only the surface of the container contents is scanned.

3. A method as claimed in claim 1, characterised in that the relative movement of the container (1) to the X-ray (9) is controlled by a computer to be such that only the surface of the container contents is scanned.

4. A method as claimed in claim 2, characterised in that the distribution of the mass attenuation coefficient is determined for at least two different radiation directions and that the spatial position of unstated container contents is thereby determined.

5. A method as claimed in one of claims 1 to 4, characterised in that the container (1) is shifted to and fro and up and down and that the sliding movement or the lifting movement is effected continuously, but that the respective other movement is gradually carried out, that the penetration by rays or the comparison is effected so as to be pulse-form and that the pulses are set to be so short than an inadmissible movement blur is not included in the measured values.

6. A method as claimed in claim 4, characterised in that the container (1) is scanned line by line over a container surface, that at least one diverging X-ray beam penetrates the container, that the mass attenuation coefficient is measured at a plurality of measuring points, which are staggered in the direction at right-angles to the scanning direction, by means of the diverging X-ray beam, that the measured values which are obtained when scanning a line are stored as measurment strips, that from the unstated position of an object in two or more measurement strips, from the line spacing and from the radiation directions in the individual measurement strips, the spatial position of the object in the container is fully calculated.

7. A device for the implementation of the method as claimed in claim 1, characterised in that it comprises means for weighing the container (1), for determining the packing density and for analysing the distribution of the mass attenuation coefficient, that in order to move the container (1) relative to an X-ray (9) it comprises an elevating platform (2) for the container (1), which elevating platform is at least adjustable in height and in a horizontal direction, and that a stationary X-ray source (3) and a stationary X-ray receiver (V) are fired on two mutually opposite sides of the elevating platform in such a manner that the main ray (9) of the X-ray source (3) hits the X-ray receiver (V) and the scattered radiation (8) produced at the irradiated objects cannot reach the receiver (4).

8. A device as claimed in claim 7, characterised in that it comprises a scintillation crystal (11) as a receiver and an opto-electrical transducer (10) which can be reached by the radiation of said crystal, and that the output of the opto-electrical transducer (10) is switched to a computer which is suitable for storing the signals.

9. A device as claimed in claim 7, characterised in that the X-ray source (3) transmits diverging main rays (13,14,15), that as a receiver are arranged a plurality of scintillation crystals (11) which are arranged in a row and a separate opto-electrical transducer (10) which can be reached by the radiation of said scintillation crystal is arranged for each scintillation crystal (11), where the scintillation crystals (11) are arranged so as to be distributed in a direction which is different from the scanning direction, and that there is provided an adjusting device for the elevating platform which device, following the scanning of a line on the container surface to be scanned, adjusts onto the next line and allows the adjustment of the setting path to a value which corresponds to the dimension of the main rays (13, 14, 15) in the adjusting direction (A, B) which are detected by the scintillation crystal (11), and which dimension is measured at the inlet of the container (1).

## Revendications

1. Procédé pour examiner le contenu de conteneurs, selon lequel on radiographie un conteneur (1) à l'aide d'un rayonnement X (9) possédant une faible section transversale et une énergie élevée, en déplaçant le conteneur (1) par rapport au rayonnement X (9) et en déterminant de ce fait la distribution de la projection des coefficients d'affaiblissement de masse sur une surface du conteneur, caractérisé par le fait qu'on pèse le conteneur (1), qu'on détermine la hauteur de remplissage du conteneur (1) au moyen de la modification des coefficients d'affaiblissrment de masse et qu'à partir de la hauteur de remplissage déterminée et du poids de la charge, déterminé par l'intermédiaire de la pesée et du poids à vide indiqué, on détermine la densité d'entassement et on la compare à la densité d'entassement du contenu indiqué du conteneur.

2. Procédé suivant la revendication 1, caractérisé par le fait qu'on introduit la distribution des coefficients d'affaiblissement de masse dans une mémoire de données et qu'on évalue les variations spatiales des coefficients d'affaiblissement de masse pour déterminer la position et le type d'un contenu non indiqué dans le conteneur (1).

3. Procédé suivant la revendication 1, caractérisé par le fait que le déplacement relatif du conteneur (1) par rapport au rayonnement X (9) est commandé par un ordinateur de telle sorte que seule la surface du conteneur est explorée.

4. Procédé suivant la revendication 1, caractérisé par le fait qu'on détermine la distribution des coefficients d'affaiblissement de masse pour au moins deux directions différentes de rayonnement et qu'on détermine ainsi la position spatiale de contenu non indiqué du conteneur.

5. Procédé suivant l'une des revendications 1 à 4, caractérisé par le fait qu'on déplace en va-et-vient le conteneur (1) et qu'on le soulève et on l'abaisse et que le mouvement de déplacement en va-et-vient ou le mouvement de levage est exécuté de façon continue, alors que l'autre mouvement respectif est exécuté pas-à-pas, et que la radiographie ou la comparaison s'effectue de façon impulsionnelle et que la durée des impulsions est réglée à une valeur suffisamment brève pour qu'aucun flou de bougé inadmissible n'affecte les valeurs de mesure.

6. Procédé suivant la revendication 4, caractérisé par le fait qu'on explore le conteneur (1) ligne par ligne au niveau de l'une de ses surfaces, qu'au moins un faisceau divergent de rayons X irradie le conteneur, qu'on mesure les coefficients d'affaiblissement de masse par l'intermédiaire du faisceau divergent de rayons X en plusieurs points de mesure, qui sont situés les uns par rapport aux autres dans la direction perpendiculaire à la direction d'exploration, qu'on mémorise les valeurs de mesure ainsi obtenues lors de l'exploration d'une ligne sous la forme de bandes de mesure, et qu'on calcule complètement la position spatiale de l'objet dans le conteneur à partir de la position d'un objet non indiquée dans une ou plusieurs bandes de mesure, à partir de la distance entre lignes et des directions de rayonnement, au niveau des différents points de mesure.

7. Dispositif pour la mise en oeuvre du procédé suivant la revendication 1, caractérisé par le fait qu'il comporte des moyens pour peser le conteneur (1) pour déterminer la densité d'entassement et pour évaluer la distribution des coefficients d'affaiblissement de masse, qu'il présente, pour le déplacement du conteneur (1) par rapport à un rayonnement X (9), une plate-forme de levage (2) pour le conteneur (1), qui est déplaçable au moins en hauteur et suivant une direction horizontale, et qu'une source fixe (3) du rayonnement X et un récepteur fixe (4) du rayonnement X sont disposés sur deux côtés réciproquement opposés de la plate-forme de levage, que le rayon principal (9) de la source (3) de rayonnement X tombe sur le récepteur (4) du rayonnement X et que le rayonnement diffus (8), produit au niveau des objets irradiés, ne peut pas atteindre le récepteur (4).

8. Dispositif suivant la revendication 7, caractérisé par le fait qu'il contient, en tant que récepteur, un cristal à scintillation (11) et un transducteur opto-électrique (10) pouvant être atteint par le rayonnement de ce cristal, et que la sortie du transducteur opto-glectrique (10) est raccordée à un ordinateur approprié pour la mémorisation des signaux.

9. Dispositif suivant la revendication 7, caractérisé par le fait que la source (3) de rayonnement X émet des rayons principaux divergents (13, 14, 15), qu'il est prévu en tant que récepteur, plusieurs cristaux à scintillation (11) branchés en série, et pour chaque cristal à scintillation (11), un transducteur opto-électrique particulier (10) pouvant être atteint par le rayonnement de ce cristal, les cristaux à scintillation définissant les rayons principaux divergents, que les cristaux à scintillation (11) sont disposés en étant répartis dans une direction différente de la direction d'exploration et qu'il est prévu un dispositif de déplacement de la plate-forme de levage, qui après l'exploration d'une ligne de la surface du conteneur devant être explorée, se déplace jusqu'à la ligne suivante et permet le réglage de la voie de réglage à une valeur qui correspond à la dimension des rayons principaux (13, 14, 15), détectés au total par les cristaux à scintillation (11), dans la direction de déplacement (A, B), cette dimension étant mesurée au niveau de l'entrée dans le conteneur (1).

# FIG 1

# FIG 2

# FIG 3